# EUROPÄISCHE PATENTANMELDUNG

(11) **EP 0 688 140 A2**
(43) Veröffentlichungstag der Anmeldung: **20.12.1995**
(21) Anmeldenummer: 95109085.1
(22) Anmeldetag: 13.06.1995
(51) Int. Cl.: H04Q 7/38

(54) **Verfahren zur sicheren Übertragung der Rufnummer eines rufenden Teilnehmers und zur verschlüsselten Übertragung von Daten**

(30) Priorität: 15.06.1994 DE 4420871
(71) Anmelder: Informatikzentrum der Sparkassenorganisation GmbH, D-53227 Bonn (DE)
(72) Erfinder: Löhmann, Ekkehard, D-53639 Königswinter (DE)
(74) Vertreter: Gornott, Dietmar, Dipl.-Ing.

(57) **Zusammenfassung**

Die Erfindung betrifft ein Verfahren zur sicheren Übertragung einer die Identität eines Teilnehmers in einem Mobilfunknetz beschreibenden Information, insbesondere der Rufnummer, zu einem Teilnehmer in einem ISDN-Netz und ein Verfahren zur verschlüsselten Übertragung von Daten, insbesondere Sprache darstellenden Daten. Dabei wird das Ergebnis einer Authentikation des Teilnehmers in einem Mobilfunknetz gesichert zum Teilnehmer im ISDN-Netz übertragen. Außerdem wird eine an sich aus dem Mobilfunk bekannte Verschlüsselung zur weitergehenden Verwendung in Festnetzen abgewandelt.

## Beschreibung

Die Erfindung betrifft ein Verfahren zur sicheren Übertragung einer die Identität eines Teilnehmers in einem Mobilfunknetz beschreibenden Information, insbesondere der Rufnummer, zu einem Teilnehmer in einem ISDN-Netz und ein Verfahren zur verschlüsselten Übertragung von Daten, insbesondere Sprache darstellenden Daten.

Über Telefonnetze werden häufig Anweisungen und Informationen mit großer wirtschaftlicher Tragweite übertragen. Dieses ist beispielsweise bei telefonischen Anweisungen an Banken und bei der Anzeigenannahme einer Zeitung der Fall. Dazu ist es erforderlich, daß die jeweils angerufene Stelle, beispielsweise die Bank, den Anrufer authentifiziert, das heißt, seine Identität prüft. Soweit diese Prüfung im technischen Bereich liegt, ist beim ISDN-Netz zwar eine Anzeige der Rufnummer des rufenden Teilnehmers - genauer gesagt, des rufenden Endgerätes - am Endgerät des gerufenen Teilnehmers möglich. Die Übertragung dieser Information ist jedoch nicht in hohem Maße vor Eingriffen sicher.

Außerdem ist bei den obengenannten Telefongesprächen eine Vertraulichkeit sicherzustellen, was durch Verschlüsselungsgeräte möglich ist. Diese sind jedoch einerseits teuer und bedürfen andererseits einer Vereinbarung über die Art der Verschlüsselung und über den Verschlüsselungsschlüssel zwischen beiden Teilnehmern.

Aufgabe der vorliegenden Erfindung ist es, eine Sicherung der Übertragung einer die Identität eines Teilnehmers beschreibenden Information mit einfachen Mitteln zu gewährleisten. Außerdem soll eine verschlüsselte Übertragung von Daten einem weiten Kreis von Teilnehmern nutzbar gemacht werden, ohne jeweils teure Verschlüsselungsgeräte einsetzen und zusätzliche bilaterale Schlüsselvereinbarungen durchführen zu müssen.

Zur sicheren und zuverlässigen Übertragung einer die Identität eines Teilnehmers in einem Mobilfunknetz beschreibenden Information ist gemäß einer ersten Ausführungsform der Erfindung vorgesehen, daß der Teilnehmer im Mobilfunknetz den ISDN-Dienst CLIP (Calling line identification presentation) bucht, daß der Anruf über eine Vermittlungsstelle (MSC) des Mobilfunknetzes zum Teilnehmer im ISDN-Netz geleitet wird, welche zusammen mit dem Teilnehmer im ISDN-Netz einer geschlossenen Benutzergruppe des Paketdatendienstes angehört, und daß die die Identität beschreibende Information von der vermittlungsstelle zum Teilnehmer im ISDN-Netz übertragen wird. Dabei ist besonders vorteilhaft, wenn die die Identität beschreibende Information in der Initial Access Message von der Vermittlungsstelle zum Teilnehmer im ISDN-Netz übertragen wird.

Durch diese Ausführungsform werden die Funktionalitäten des Mobilfunknetzes und des ISDN-Netzes in besonders geschickter Weise ausgenutzt. Es ist an den Schaltungen der bestehenden Netze keine Änderung oder Ergänzung erforderlich, lediglich die Programme in den betroffenen Komponenten des Mobilfunknetzes sind geringfügig zu ändern.

Insbesondere wird die äußerst sichere Authentikation durch das Mobilfunknetz für das Verfahren mitverwendet, wobei durch die Benutzung des Paketdatendienstes innerhalb einer geschlossenen Benutzergruppe die weitere Übertragung der Information bis zum ISDN-Teilnehmer geschützt ist.

Zur verschlüsselten Übertragung von Daten, insbesondere Sprache Darstellenden Daten, ist gemäß einer zweiten Ausführungsform der Erfindung vorgesehen, daß von einem sendenden Teilnehmer die Daten mit einem in einer Zentralstelle vorliegenden Schlüssel verschlüsselt zur Zentralstelle übertragen werden, daß in der Zentralstelle ein ebenfalls in der Zentralstelle vorliegender Schlüssel des empfangenden Teilnehmers mit dem Schlüssel des sendenden Teilnehmers logisch verknüpft wird, daß die Zentralstelle die verschlüsselten Daten und die logische Verknüpfung beider Schlüssel an den empfangenden Teilnehmer sendet, und daß beim empfangenden Teilnehmer mit Hilfe des Schlüssels des empfangenden Teilnehmers aus der logischen Verknüpfung der Schlüssel des sendenden Teilnehmers berechnet und zur Entschlüsselung der Daten verwendet wird.

Diese Ausführungsform kann an sich unabhängig von oder gemeinsam mit dem erstgenannten Verfahren zur sicheren Übertragung einer die Identität eines Teilnehmers beschreibenden Information in beliebigen Netzen angewendet werden. Eine bevorzugte Anwendung erfolgt jedoch im Zusammenhang mit einem Mobilfunknetz derart, daß der sendende Teilnehmer ein Teilnehmer eines Mobilfunknetzes ist und zum Zeitpunkt des Gesprächsaufbaus signalisiert, daß das folgende Gespräch in verschlüsselter Form über die Basisstation des Mobilfunknetzes hinaus verschlüsselt zu übertragen ist, daß in der mit dem Teilnehmer verbundenen Basisstation des Mobilfunknetzes keine Entschlüsselung der verschlüsselten Daten erfolgt und daß die logische Verknüpfung mit dem Schlüssel des empfangenden Teilnehmers in einer Mobilvermittlungsstelle (MSC) erfolgt. Dabei ist vorteilhaft, wenn der Teilnehmer des ISDN-Netzes in einem Teilnehmerregister (HLR) des Mobilfunknetzes als Empfänger von verschlüsselten Daten gespeichert ist.

Bei der zweiten Ausführungsform der Erfindung ist es besonders vorteilhaft, wenn ein den Wunsch, daß die verschlüsselte Übertragung bis zum empfangenden Teilnehmer erfolgen soll, darstellendes Signal in einem User-Daten-Kanal vom sendenden Teilnehmer zur Basisstation übertragen wird.

Auch die zweite Ausführungsform nutzt in vorteilhafter Weise die Funktionalität des Mobilfunknetzes, insbesondere nach dem GSM-Standard, aus und verlängert praktisch den Weg, auf dem die Daten in verschlüsselter Form transportiert werden, bis zum Teilnehmer im ISDN-Netz. Da eine derartige Verlängerung des verschlüsselten Weges nicht in jedem Fall erforderlich ist, ist bei einer vorteilhaften Anordnung zur Durchführung des erfindungsgemäßen Verfahrens vorgesehen, daß ein Mobilfunkgerät des sendenden Teilnehmers mit einem Bedienelement zur Eingabe des Wunsches zu einer verschlüsselten Übertragung bis zum sendenden Teilnehmer versehen ist.

Der jeweilige empfangende Teilnehmer im ISDN-Netz wird in den meisten Anwendungsfällen der erfindungsgemäßen Verfahren ein erhebliches Verkehrsaufkommen aufweisen. Deshalb ist bei einer weiteren vorteilhaften Anordnung zur Durchführung des erfindungsgemäßen Verfahrens vorgesehen, daß das Endgerät des empfangenden Teilnehmers vorzugsweise als digitale Nebenstellenanlage ausgebildet ist.

Eine vorteilhafte Möglichkeit zur Speicherung und gegebenenfalls auch Änderung der für die Entschlüsselung erforderlichen Daten im Endgerät des empfangenden Teilnehmers besteht darin, einen Kartenleser für eine Chip-Karte anzuordnen, welche die Verschlüsselungsinformation nach dem Standard des Mobilfunknetzes enthält.

Ein Ausführungsbeispiel der Erfindung ist in der Zeichnung dargestellt und in der nachfolgenden Beschreibung näher erläutert. Es zeigt:

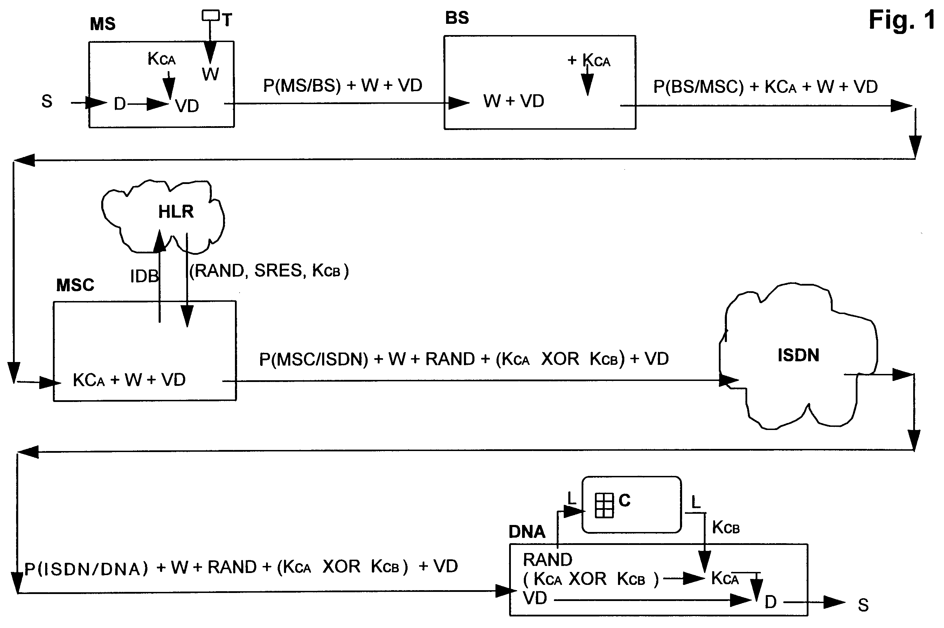

- Fig. 1: eine schematische Darstellung des Ablaufs der Kommunikation nach dem erfindungsgemäßen Verfahren zwischen einem Teilnehmer eines Mobilfunknetzes und einem Teilnehmer des ISDN-Netzes und
- Fig. 2: eine entsprechende schematische Darstellung der Kommunikation nach dem bekannten Verfahren.

Gleiche Teile sind in den Figuren mit gleichen Bezugszeichen versehen.

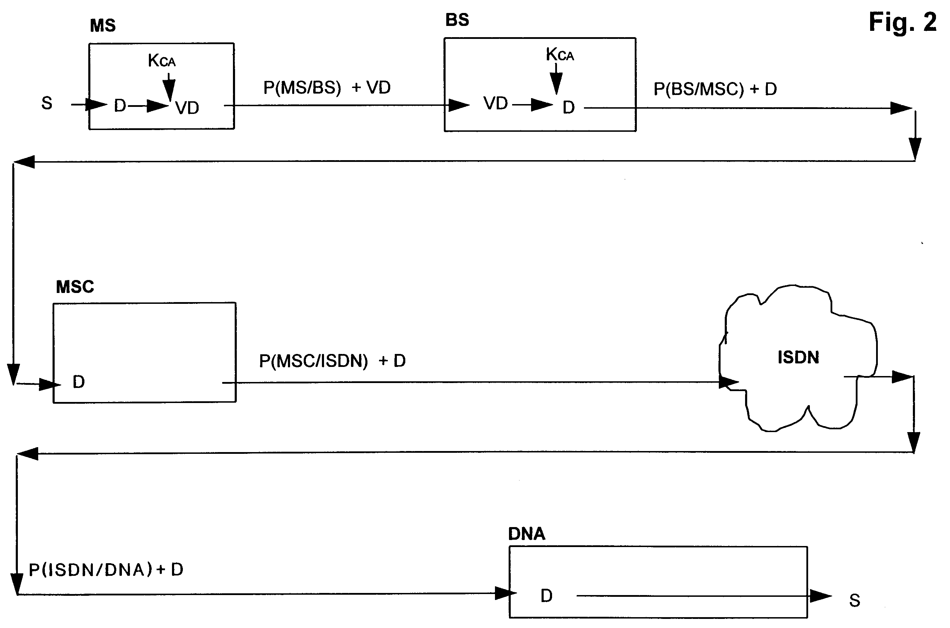

Vor der Beschreibung des erfindungsgemäßen Verfahrens wird der bekannte, derzeit praktizierte Ablauf der Kommunikation anhand von Fig. 2 erläutert. Dabei sind lediglich diejenigen Funktionen der Teilnehmer bzw. der Endgeräte und der Netze dargestellt, die zum Verständnis der Erfindung erforderlich sind. Der Teilnehmer des Mobilfunknetzes wird im folgenden A-Teilnehmer, derjenige des ISDN-Netzes B-Teilnehmer genannt. Meldet sich der A-Teilnehmer beim Mobilfunknetz an, erhält er von der Basisstation BS eine Zufallszahl RAND. In seinem Mobilfunkgerät MS werden anhand der in der Chip-Karte des A-Teilnehmers gespeicherten Teilnehmerdaten ein Authentikationsparameter SRES und ein Sessionsschlüssel KCA berechnet. Dieser Vorgang geht dem eigentlichen Verbindungsaufbau voran und ist in den Figuren nicht dargestellt.

Die zu übertragende Sprache S wird im Mobilfunkgerät MS digitalisiert. Die entstehenden digitalen Daten D werden dann mit dem Sessionsschlüssel KCA verschlüsselt. Zusätzlich zu Protokollinformationen P(MS/BS), die für die Verbindung zwischen der Mobilstation MS und der Basisstation BS erforderlich sind, werden die verschlüsselten digitalen Daten VD zur Basisstation gesendet. Die Entschlüsselung dieser Daten erfolgt mit dem Sessionsschlüssel KCA in der Basisstation, der in gleicher Weise aus der Zufallszahl RAND und aus im Mobilfunknetz gespeicherten Teilnehmerdaten gebildet wurde.

Durch die beschriebene verschlüsselte Übertragung der Daten von der Mobilstation zur Basisstation wird somit die Funkstrecke zwischen der Mobilstation MS und der Basisstation BS gegen Abhören gesichert. Die weitere Übertragung der digitalen Daten D zur Vermittlungsstelle MSC, zum ISDN-Netz ISDN und zur digitalen Nebenstellenanlage DNA des B-Teilnehmers erfolgt unverschlüsselt, wie es in Festnetzen allgemein üblich ist, zusammen mit Protokollinformationen P(MSC/ISDN) bzw. P(ISDN/DNA).

Eine Authentitätsprüfung mit dem Authentikationsparameter SRES ist bereits deshalb erforderlich, um eine Zuordnung der anfallenden Gebühren zum A-Teilnehmer zu ermöglichen. Des weiteren ist dadurch eine zuverlässige Identifikation des A-Teilnehmers für den jeweils gerufenen Teilnehmer im Mobilfunknetz möglich. Bei einer ersten Ausführungsform des erfindungsgemäßen Verfahrens wird die die Identität des anrufenden Mobilfunkteilnehmers beschreibende Information innerhalb der Protokollinformation bis zum ISDN-Teilnehmer übertragen.

Zur Durchführung des erfindungsgemäßen Verfahrens, von dem ein Ausführungsbeispiel schematisch in Fig. 2 dargestellt ist, ist die digitale Nebenstellenanlage DNA des B-Teilnehmers mit einer Leseeinrichtung L für eine Chip-Karte C versehen. Die Chip-Karte C ist entsprechend den in Mobilfunkgeräten verwendeten Chip-Karten mit Daten versehen, die insbesondere eine Authentikation des Teilnehmers und eine Verschlüsselung bzw. Entschlüsselung der digitalen Daten ermöglichen.

Voraussetzung zur Einbeziehung der digitalen Nebenstellenanlage DNA des B-Teilnehmers in das erfindungsgemäße Verfahren ist eine Anmeldung bei dem Mobilfunknetzbetreiber. Dabei werden Daten des B-Teilnehmers in einem zur Speicherung der Daten von Mobilfunk-Teilnehmern vorgesehenen Register, dem sogenannten Home Location Register HLR abgelegt. Die übrigen Komponenten des Mobilfunknetzes und des ISDN-Netzes entsprechen den in Fig. 2 dargestellten abgesehen von den im folgenden erwähnten Ergänzungen. So ist beispielsweise die Mobilstation MS mit einer Eingabemöglichkeit ausgerüstet, beispielsweise eine Drucktaste T, mit welcher der Wunsch (Vertraulichkeitswunsch) nach einer verschlüsselten Übertragung bis zum B-Teilnehmer eingegeben werden kann.

Zum Aufbau einer Verbindung mit dem B-Teilnehmer meldet sich der A-Teilnehmer wie im Zusammenhang mit Fig. 2 beschrieben beim Mobilfunknetz an und bekommt daraufhin eine Zufallszahl RAND geschickt, aus der mit Hilfe seiner Chip-Karte der Authentikationsparameter SRES und der Sessionsschlüssel KCA berechnet werden. Außerdem drückt der Teilnehmer A bereits zum Zeitpunkt des Gesprächsaufbaus die Taste T. Die digitalen Daten D werden dann wie bei dem bekannten Verfahren mit Hilfe von KCA verschlüsselt. Die verschlüsselten digitalen Daten VD werden zusammen mit Protokollinformation P(MS/BS) zur Basisstation BS übertragen. Zusätzlich wird über die Funkverbindung der Basisstation signalisiert, daß ein Vertraulichkeitswunsch W vorliegt. Dieses führt dazu, daß in der Basisstation die verschlüsselten digitalen Daten VD nicht entschlüsselt werden. Es wird jedoch den verschlüsselten digitalen Daten VD außer der ohnehin erforderlichen Protokollinformation P(BS/MSC) und dem Vertraulichkeitswunsch W der Sessionsschlüssel KCA hinzugefügt.

Die Vermittlungsstelle MSC des Mobilfunknetzes erkennt den Vertraulichkeitswunsch W und entnimmt den Protokollinformationen P(BS/MSC) die MSISDN-Nummer des B-Teilnehmers. Unter dieser Nummer fordert die Vermittlungsstelle MSC aus dem Register HLR ein Triplett an, das aus einer Zufallszahl RAND, dem dazugehörigen Authentikationsparameter SRES und dem Sessionsschlüssel KCB des B-Teilnehmers besteht. Die Vermittlungsstelle MSC führt nun eine Exklusiv-Oder-Verknüpfung der beiden Sessionsschlüssel KCA und KCB durch und überträgt das Ergebnis zusammen mit der Zufallszahl RAND und den Protokollinformationen P(MSC/ISDN) zum ISDN-Netz. Dieses überträgt die Protokollinformationen P(ISDN/DNA), den Vertraulichkeitswunsch W, die Zufallszahl RAND, die verknüpften Sessionsschlüssel und die verschlüsselten Daten an die digitale Nebenstellenanlage des B-Teilnehmers. Da der Sessionsschlüssel KCB aus RAND und den in der Chip-Karte C gespeicherten Daten des Teilnehmers B berechnet werden kann, kann aus der Exklusiv-Oder-Verknüpfung der Sessionsschlüssel KCA und KCB der Sessionsschlüssel KCA gewonnen und zum Entschlüsseln der verschlüsselten digitalen Daten VD verwendet werden, die anschließend in Sprachsignale umgesetzt werden.

## Patentansprüche

1. Verfahren zur sicheren Übertragung einer die Identität eines Teilnehmers in einem Mobilfunknetz beschreibenden Information, insbesondere der Rufnummer, zu einem Teilnehmer in einem ISDN-Netz, dadurch gekennzeichnet, daß der Teilnehmer im Mobilfunknetz den ISDN-Dienst CLIP (Calling line identification presentation) bucht, daß der Anruf über eine Vermittlungsstelle (MSC) des Mobilfunknetzes zum Teilnehmer im ISDN-Netz geleitet wird, welche zusammen mit dem Teilnehmer im ISDN-Netz einer geschlossenen Benutzergruppe des Paketdatendienstes angehört, und daß die die Identität beschreibende Information von der Vermittlungsstelle zum Teilnehmer im ISDN-Netz übertragen wird.

2. Verfahren nach Anspruch 1, dadurch gekennzeichnet, daß die die Identität beschreibende Information in der Initial Access Message von der Vermittlungsstelle zum Teilnehmer im ISDN-Netz übertragen wird.

3. Verfahren zur verschlüsselten Übertragung von Daten, insbesondere Sprache darstellenden Daten, dadurch gekennzeichnet, daß von einem sendenden Teilnehmer die Daten mit einem in einer Zentralstelle vorliegenden Schlüssel verschlüsselt zur Zentralstelle übertragen werden, daß in der Zentralstelle ein ebenfalls in der Zentralstelle vorliegender Schlüssel des empfangenden Teilnehmers mit dem Schlüssel des sendenden Teilnehmers logisch verknüpft wird, daß die Zentralstelle die verschlüsselten Daten und die logische Verknüpfung beider Schlüssel an den empfangenden Teilnehmer sendet, und daß beim empfangenden Teilnehmer mit Hilfe des Schlüssels des empfangenden Teilnehmers aus der logischen Verknüpfung der Schlüssel des sendenden Teilnehmers berechnet und zur Entschlüsselung der Daten verwendet wird.

4. Verfahren nach Anspruch 3, dadurch gekennzeichnet, daß der sendende Teilnehmer ein Teilnehmer eines Mobilfunknetzes ist und zum Zeitpunkt des Gesprächsaufbaus signalisiert, daß das folgende Gespräch in verschlüsselter Form über die Basisstation hinaus verschlüsselt zu übertragen ist, daß in der mit dem Teilnehmer verbundenen Basisstation des Mobilfunknetzes keine Entschlüsselung der verschlüsselten Daten erfolgt und daß die logische Verknüpfung mit dem Schlüssel des empfangenden Teilnehmers in einer Mobilvermittlungsstelle (MSC) erfolgt.

5. Verfahren nach Anspruch 4, dadurch gekennzeichnet, daß der Teilnehmer des ISDN-Netzes in einem Teilnehmerregister (HLR) des Mobilfunknetzes als Empfänger von verschlüsselten Daten gespeichert ist.

6. Verfahren nach einem der Ansprüche 4 oder 5, dadurch gekennzeichnet, daß ein den Wunsch, daß die verschlüsselte Übertragung bis zum empfangenden Teilnehmer erfolgen soll, darstellendes Signal in einem User-Daten-Kanal vom sendenden Teilnehmer zur Basisstation übertragen wird.

7. Anordnung zur Durchführung des Verfahrens nach einem der Ansprüche 4 bis 6, dadurch gekennzeichnet, daß ein Mobilfunkgerät des sendenden Teilnehmers mit einem Bedienelement zur Eingabe des Wunsches zu einer verschlüsselten Übertragung bis zum sendenden Teilnehmer versehen ist.

8. Anordnung zur Durchführung des Verfahrens nach einem der Ansprüche 4 bis 6, dadurch gekennzeichnet, daß das Endgerät des empfangenden Teilnehmers vorzugsweise als digitale Nebenstellenanlage ausgebildet ist.

9. Anordnung zur Durchführung des Verfahrens nach einem der Ansprüche 4 bis 6, dadurch gekennzeichnet, daß ein Kartenleser für eine Chip-Karte angeordnet ist, welche die Verschlüsselungsinformation nach dem Standard des Mobilfunknetzes enthält.
